# EUROPEAN PATENT APPLICATION

(11) **EP 0 803 666 A2**
(43) Date of publication of application: **29.10.1997**
(21) Application number: 97105723.7
(22) Date of filing: 07.04.1997
(51) Int. Cl.: F16J 15/12

(54) **Spiral wound gasket**

(30) Priority: 23.04.1996 GB 9608375
(71) Applicant: Flexitallic Sealing Materials Ltd, Manchester M17 1RA (GB)
(72) Inventor: Hoyes, John Robert, Littleborough, Lancashire OL15 9NW (GB); Atkinson, Alan William, Rugby CV23 8TJ (GB); Deluca, George Michael, Seabrook, Texas 77586 (US)
(74) Representative: Moffat, John Andrew

(57) **Abstract**

A gasket for sealing between two substantially planar faces is described, the gasket comprising a radially outer metal containment member wound from at least one turn of a metal strip; a sealing portion of a softer filler material lying radially inwardly of the containment member and including at least two turns of said filler material; and, an inner containment member of at least one turn of a metal strip. The gasket is particularly useful where only relatively low clamping loads are available.

## Description

The present invention relates to so-called spiral wound gaskets of the type which are made by spiral winding of metal strip and softer filler material.

Spiral wound gaskets comprising alternate turns of a profiled metal strip and softer filler material strip are commonly used in industrial sealing applications where they are positioned, for example, between a pair of pipe flanges and compressed by the use of bolts to hold the flanges together. Such gaskets frequently have an associated guide or centring ring which is essentially a flat metal plate which forms a distance piece/spacer to limit the compression of the gasket between the flanges. The flange securing bolts are usually tightened to a predetermined torque thus imposing a predetermined total load on the gasket. Because of the inherent strength and resilience of such conventional gaskets they are typically used to seal fluids at pressures over about 300 psi in flanges which have sufficient bolting to ensure that the gasket is seated and a seal is created.

More recently, spiral wound gaskets have been developed for us in applications where lower pressures up to about 300 psi are to be sealed and the available bolting loads are commensurately reduced owing to the use of less rigidly constructed securing flanges and fewer securing bolts. An example of such a gasket is described in WO93/07407 where the softer filler material initially stands proud of the profiled metal interleaving, thus allowing easier compression of the gasket. However, although the clamping loads are lower than for the earlier types of gasket, the loads are nevertheless high in absolute terms and substantial metal thicknesses are used to sustain them and control distortion thereof.

Spiral wound gaskets are very efficient as sealing devices, not least because of the high loads which are used to compress and retain them in situ. It would be desirable to use a spiral wound gasket in applications such as in vehicle exhausts at junctions between pipes and catalytic converters for example. However, the available clamping loads are very low due to the relatively flimsy securing flanges which are normally available, the low number of clamping bolts (usually four or less) and the relatively small section and thread areas of those bolts that are available. The established sealing systems for such exhausts are mica foil on a tanged core or exfoliated graphite on a tanged steel core. Due to the relatively low bolt load available and the contact area of these gaskets, the surface stress achieved on these gaskets is low and the sealing unsatisfactory.

It would also be desirable to be able to use spiral wound gaskets, because of their high level of seal security, with glass lined, glass or enamelled flanges as are often used in the chemical industry. The problem is that with conventional types of spiral wound gaskets there is insufficient bolt load available, or gasket compression, to create a seal in these known types of flanges.

It is an object of the present invention to provide a spiral wound type gasket having high sealing ability but where only relatively low clamping loads are available.

According to the present invention there is provided a gasket for sealing between two substantially planar faces, the gasket comprising a radially outer metal containment member wound from at least one turn of a metal strip; a sealing portion of a softer filler material lying radially inwardly of the containment member and including at least two turns of said filler material; and, in an inner containment member of at least one turn of a metal strip.

A spiral wound gasket as made by the present invention would be suitable for such automotive exhaust and other industrial installations as described above, as they would both seal at the low bolt loads available and have sufficient compression to allow accommodation of the irregularities which are inherent with such flange types.

The gasket may also include an outer and/or an inner guide member which acts as a distance piece physically limiting the degree to which the gasket may be compressed between the two faces to be sealed. Such guide members may be attached to the outer or inner containment members by co-operating features such as a circumferential projection and groove or may be attached to some other known technique such as welding, eg, spot welding for example.

Compression of the gasket may alternatively be controlled by features associated with the faces to be sealed. For example, a recess may be provided in one or bath faces and in which the gasket is located.

Essentially, the gasket of the present invention comprises an outer spirally wound containment member formed of steel strip for example, a central portion of a softer filler material (to be described below) also spirally wound and, an inner containment member formed of steel strip for example, the central filler portion being relatively tightly sandwiched between the inner and outer containment members.

The central sealing filler portion may stand proud of the inner and outer containment members when viewed in side elevation.

The inner and outer containment members may be formed from steel strip, which may or may not be profiled, or any other suitable metal depending upon the actual application for example. Where used, actual profile shape when viewed in cross section may be any that is suitable for the particular application and may be for example vee-section, curved, semi-circular, or a combination of such shapes.

The filler material may be any suited to the application and/or environment in which the gasket is to be used. The filler may for example be selected from strip formed from compacted exfoliated graphite; compacted exfoliated vermiculite; mica paper; and, various plastics materials such as polytetrafluoroethylene (PTFE), polyetheretherketone (PEEK) for example. The plastics materials themselves may contain, if required, a reinforcing or property modifying component.

The actual choice of gasket filler will be mainly dictated by environmental conditions such as temperature and chemical considerations. For example, where the gasket is used in a vehicle exhaust sealing application, graphite strip may not be chosen because the ultimate temperature may approach 800/900°C and graphite is prone to oxidation above about 350°C, therefore, a filler of vermiculite may be more appropriate.

Compacted exfoliated graphite and vermiculite in their basic forms have a relatively low strength and these materials in one of their reinforced forms such as is described in GB 2154675 for example may be more suitable in some instances. Other forms of reinforcement which allow this shortcoming to be overcome may be provided by the application of a plastics material film to the foil.

Fillers such as compacted exfoliated graphite and vermiculite have particles of platelet form which extend in a direction parallel to the plane of the strip. Therefore, when these materials are used in the gasket of the present invention, the platelet particles are aligned in a direction substantially normal to the plane of the gasket. Thus, when the soft filler is compressed in the gasket when being tightened between two faces, there is a natural resilient or restoring force tending to straighten out the filler which results in good long-term sealing ability.

For industrial sealing applications where a high degree of resistance to chemical attack may be required, PTFE may be the most appropriate filler in one of its many forms, eg, low density porous form.

A particularly appropriate form of PTFE is one in which a plate mineral such as talc for example, is used as a filler for the PTFE and in which the plates of the mineral are aligned in the plane of the PTFE foil so that they are substantially normal to the plane of the gasket. The plates will then enhance the resilience of the gasket.

Owing to the inherently high compressibility of the gasket according to the present invention compared with earlier prior art gaskets, good sealing may be obtained between faces which are relatively weak and flimsy compared with the prior art and which also have substantial deviations from parallel. For example, sufficient load may be obtained on exhaust pipe flanges having a thickness of about 6mm and perhaps only two or three securing bolts, to provide adequate long-term sealing with the gaskets of the present invention.

Gaskets of the present invention may be about 1.5 to about 5mm in thickness depending upon the size and application.

Although many gaskets have a generally round shape, the gaskets according to the present invention may be formed to any conventional known outer plan shape desired including round, oval, triangular, rectangular and other polygonal shapes for example.

In some applications, the central filler/sealing portion of the gasket may be impregnated with a sealing resin such as an elastomer or a phenolic resin for example to confer additional sealing qualities at low temperature.

The gasket may be formed in a conventional manner by winding on a mandrel or former beginning with the inner containment member which will comprise at least one turn of the metal strip which may for example be spot welded to maintain the winding(s) in position; a strip of a filler material may then be joined to the inner containment member such as by adhesive means and two or more turns of filler wound onto the inner member; the outer member is then formed by winding on at least one turn of the strip, the outer turn(s) then being spot welded to maintain them in a tightly wound condition. The cross sectional shape of the strip is adopted by the filler during the winding process owing to its soft and conformable nature. The inner and outer members may be formed from pre-profiled strip or a desired profile may be formed during the winding operation by passing flat strip through forming rollers for example. It should be noted that the term 'profiled' also includes flat strip.

In order that the present invention may be more fully understood, an example will now be described by way of illustration only with reference to the accompanying drawings, of which:
Figure 1 shows a plan view of half of one embodiment of a gasket according to the present invention; and
Figure 2 which shows an enlarged partial cross section through the line 2-2 of Figure 1.

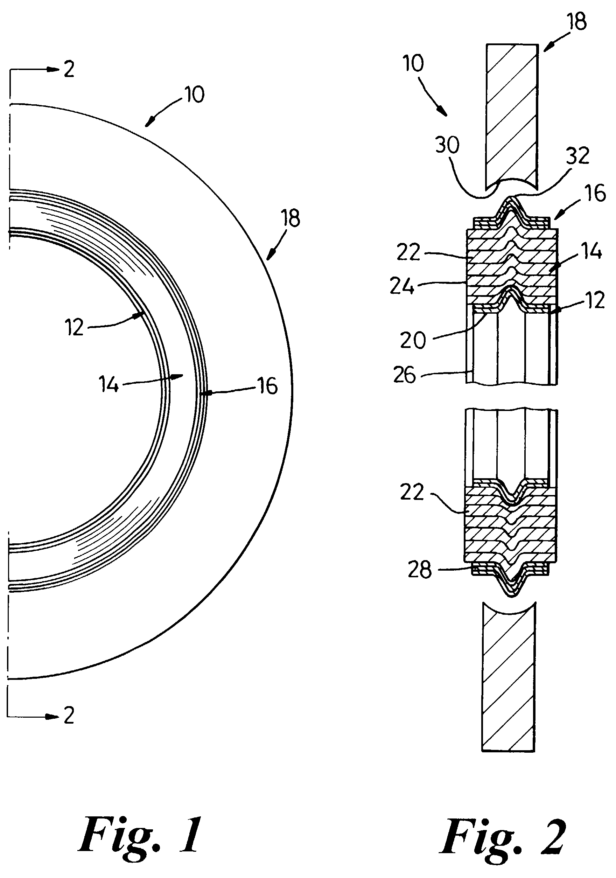

Referring now to the drawings and where the same features are denoted by common reference numerals. A gasket is indicated generally at 10 and comprises an inner containment member 12, a central sealing portion 14, an outer containment portion 16. A centring or guide ring 18 is often used. An inner ring (not shown) may also be used if required. The inner containment member comprises two turns of a stainless steel preformed strip 20 the leading edge of the strip being spot welded to the succeeding turn to maintain the strip in the wound condition. The central filler material comprises about 7 turns of a compacted exfoliated graphite material 22 strip having an initial density of about 1.1 gcm⁻³ and a nickel foil reinforcement (not shown). The outer edges 24 of the graphite strip 22 stand proud of the outer edges 26 of the steel strip to provide additional compressibility. The outer containment member 16 comprises three turns of stainless steel 28 which has the trailing edge spot welded to the preceding turn. The overall width of the steel strip was initially 4.32mm and then preformed to 3.17mm; the initial width of the graphite filler was 5.84mm, the width decreasing slightly owing to conforming to the steel preform shape on winding. The gasket was wound on a conventional winding machine. Overall diameter of the outer containment member was 82mm and diameter of orifice of inner containment member was about 69mm. The guide ring 18 is provided with a groove 30 on its inner circumference, which groove co-operates with a projection 32 on the steel strip preform of the outer containment member 16. Although shown with a gap in Figure 2, the projection 32 and groove 30 are in practice in intimate engagement.

Gaskets made by the above method had an overall thickness of about 5.33mm and compressed down easily to 3.17mm.

A sealing test was conducted on a hydraulic press with a compression stop of 3.175mm in position so that the gasket was not overcompressed. The surface finish of the test plates were 3.2-6.4µ. Using Nitrogen as the test medium at a pressure of 2.76 MPa (400 lbf/in²) and a stress on the gasket sealing area of (17.2 MPa (2500 lbf/in²) there was no discernible leakage as measured by a bubble flow meter.

## Claims

1. A gasket for sealing between two substantially planar faces, the gasket comprising a radially outer metal containment member wound from at least one turn of a metal strip; a sealing portion of a softer filler material lying radially inwardly of the containment member and including at least two turns of said filler material; and, an inner containment member of at least one turn of a metal strip.

2. A gasket according to claim 1 further comprising an outer and/or an inner guide member.

3. A gasket according to either claim 1 or claim 2 wherein the strip is metal.

4. A gasket according to any one preceding claim wherein the strip is profiled.

5. A gasket according to any one preceding claim wherein the central sealing filler portion stands proud of the inner and outer containment members when viewed in side elevation.

6. A gasket according to any one preceding claim wherein the filler material is selected from the group comprising: strip formed from compacted exfoliated graphite; compacted exfoliated vermiculite; mica paper and plastics materials such as polytetrafluoroethylene (PTFE), polyetheretherketone (PEEK).

7. A gasket according to claim 6 wherein the plastics materials contain a reinforcing or property modifying component.

8. A gasket according to any one preceding claim having a thickness lying in the range from about 1.5 to about 5mm.

9. A gasket according to any one preceding claim wherein the central filler/sealing portion of the gasket is impregnated with a sealing resin.
